# EUROPEAN PATENT APPLICATION

(11) **EP 4 108 141 A1**
(43) Date of publication of application: **28.12.2022**
(21) Application number: 22180535.1
(22) Date of filing: 22.06.2022
(51) Int. Cl.: A47J 19/02

(54) **CITRUS JUICER**

(30) Priority: 25.06.2021 US 202117358420
(71) Applicant: Lifetime Brands, Inc., Garden City, NY 11530 (US)
(72) Inventor: Krus, Matthew, Seattle (US); Morgan, Ian, Seattle (US); Piercy, Sami, Seattle (US)
(74) Representative: Forresters IP LLP

(57) **Abstract**

A citrus juicer includes a vessel configured to receive a cone segment, the cone segment defining a conduit extending from a shaft and a plurality of slits extending circumferentially thereon, a rubber spring vertically aligned with an opening of the conduit, and a reamer element in operable communication with the rubber spring. The rubber spring is fixedly mounted to a sprint support member, the spring support member coupled to the conduit extending from the shaft of the cone segment. The rubber spring further defines a centrally disposed projection. When a force is applied to a top portion of the reamer element, the rubber spring is in a compressed state such that the centrally disposed projection engages the spring support element to displace the reamer element in a vertical direction with respect to the shaft of the cone element.

## Description

### BACKGROUND

The present invention relates generally to citrus juicers, and more specifically, to a citrus juicer including a rubber spring to enable vertical movement of a dome-shaped reamer.

Traditionally, juicers are configured to extract juice from fruit of a specific size or a narrow range of sizes. In addition, conventional juicing heads are typically not designed to optimize juice extraction and minimize user effort, particularly when a user wishes to extract juice from different varieties of fruit of various shapes and sizes. In addition, conventional juicing heads may have a uniform sharpness and/or blade configuration that makes juice extraction inefficient, leaving some juice in the fruit.

### SUMMARY

In accordance with an embodiment, a citrus juicer is provided. The citrus juicer includes a vessel configured to receive a cone segment, the cone segment defining a conduit extending from a shaft and a plurality of slits extending circumferentially thereon, a rubber spring vertically aligned with an opening of the conduit, and a reamer element in operable communication with the rubber spring.

In accordance with another embodiment, a citrus juicer is provided. The citrus juicer includes a vessel configured to receive a cone segment, the cone segment defining a conduit extending from a shaft and a plurality of slits extending circumferentially thereon, a rubber spring mounted on a spring support element, the spring support element configured to be received by the conduit extending from the shaft of the cone segment, and a dual reamer in operable communication with the rubber spring.

In accordance with yet another embodiment, a citrus juicer is provided. The citrus juicer includes a vessel, a cone segment configured to be received within the vessel, a rubber spring configured to operably communicate with the cone segment, and a reamer element configured to engage the rubber spring such that vertical movement of the reamer element causes the rubber spring to transition between compressed and uncompressed states.

It should be noted that the exemplary embodiments are described with reference to different subject-matters. In particular, some embodiments are described with reference to method type claims whereas other embodiments have been described with reference to apparatus type claims. However, a person skilled in the art will gather from the above and the following description that, unless otherwise notified, in addition to any combination of features belonging to one type of subject-matter, also any combination between features relating to different subject-matters, in particular, between features of the method type claims, and features of the apparatus type claims, is considered as to be described within this document.

These and other features and advantages will become apparent from the following detailed description of illustrative embodiments thereof, which is to be read in connection with the accompanying drawings.

### BRIEF DESCRIPTION OF THE DRAWINGS

The invention will provide details in the following description of preferred embodiments with reference to the following figures wherein:
FIG. 1 illustrates a perspective view of a citrus juicer, in accordance with an embodiment of the present invention;
FIG. 2 illustrates a perspective side view of the citrus juicer of FIG. 1, in accordance with an embodiment of the present invention;
FIG. 3 illustrates a perspective top view of the citrus juicer of FIG. 1, in accordance with an embodiment of the present invention;
FIG. 4A illustrates a cross-sectional side view of the citrus juicer of FIG. 1 where the rubber spring is in a compressed state, in accordance with an embodiment of the present invention;
FIG. 4B illustrates a cross-sectional side view of the citrus juicer of FIG. 1 where the rubber spring is in an uncompressed state, in accordance with an embodiment of the present invention; and
FIG. 5 illustrates an exploded perspective view of the citrus juicer of FIG. 1, in accordance with an embodiment of the present invention.

Throughout the drawings, same or similar reference numerals represent the same or similar elements.

### DETAILED DESCRIPTION

Embodiments in accordance with the present invention provide for a citrus juicer having a vessel, a cone segment configured to be received within the vessel, a rubber spring configured to operably communicate with the cone segment, and a reamer element configured to engage the rubber spring such that vertical movement of the reamer element causes the rubber spring to transition between compressed and uncompressed states.

The juice of citrus fruit is often used in the preparation of food, as a beverage, or as a flavoring or constituent of food. Lemon juice, for example, can be used as a seasoning or to protect cut fruit such as apples from browning, as a flavoring in iced tea and lemonade, and as a constituent of various lemon-based food recipes. Fresh squeezed orange juice can be enjoyed by itself as a breakfast beverage. Lime juice can be used for many of the same purposes as lemon juice, and as a flavoring in alcoholic mixed drinks. Many other uses for citrus juices are well known.

Extracting juice from citrus fruit can be accomplished in various ways. Perhaps the simplest way is to cut the fruit in half transversely and manually squeeze the half-fruit to extract the juice. While simple, this method is not very efficient because a significant portion of the juice remains unextracted, and squeezing the fruit by hand with enough force to extract the juice can be tiring.

A more efficient method of manually extracting juice from citrus fruit uses a manual juicer that includes an upstanding, externally ridged, convex dome generally corresponding in shape and size to the inside of the rind of a citrus fruit that has been cut in half transversely. The ridged dome is supported by a surrounding ring defining a slotted annular trough that catches the juice and collects the seeds while the juice drains through the slots of the trough into a reservoir, such as a bowl, located below. In use, one half of a citrus fruit that has been cut transversely is placed on top of the ridged dome, cut side down, and the half-fruit is pressed downwardly onto the dome while twisting the fruit relative to the dome about a vertical axis. The ridges on the dome disrupt the flesh of the fruit, releasing the juice.

Many machines have been developed over the years to reduce the physical squeezing effort required. Some devices have fixed serrated domes against which a user must manually press the flesh of a fruit half, whilst pivotally oscillating the fruit half back and forth. Others have electrically driven rotating serrated domes against which the flesh of a fruit half is pressed. The former type of juice extractor can be difficult for the elderly or people having injured or arthritic hands for example. The latter on the other hand are expensive to manufacture because they require powerful electric motors, switching, power cords and the like and require significant bench space and a conveniently located power outlet.

The exemplary embodiments of the present invention alleviate such issues by introducing a simple to use citrus juicer that incorporates a rubber spring that compresses and decompresses by use of small force to allow the reamer to move or transition vertically. The vertical movement of the reamer allows for one-handed, stable operation of the citrus juicer.

It is to be understood that the present invention will be described in terms of a given illustrative architecture; however, other architectures, structures, substrate materials and process features and steps/blocks can be varied within the scope of the present invention. It should be noted that certain features cannot be shown in all figures for the sake of clarity. This is not intended to be interpreted as a limitation of any particular embodiment, or illustration, or scope of the claims.

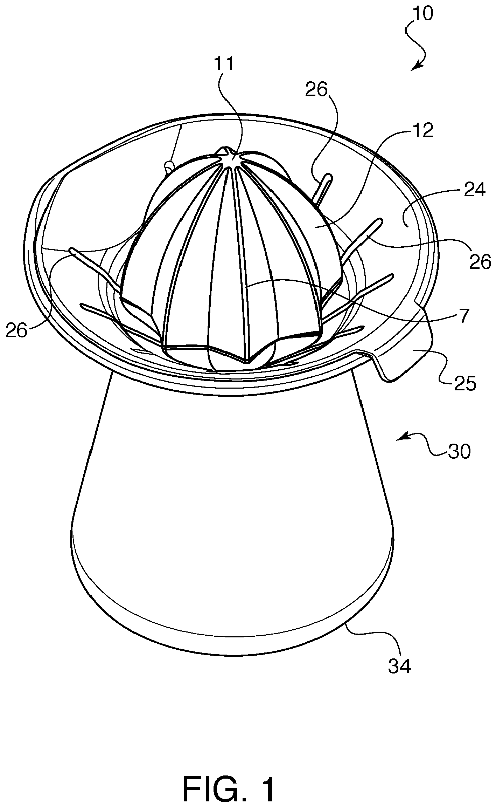

FIG. 1 illustrates a perspective view of a citrus juicer, in accordance with an embodiment of the present invention.

The citrus juicer 10 includes a reamer element (or reamer) 12 disposed over and in communication with a cone segment 24. The periphery of the reamer element 12 defines a plurality of protruding ribs 7. The reamer element 12 can be, e.g., dome-shaped to define an apex 11.

The cone segment 24 includes a tab 25 for easy disengagement of the cone segment 24 from the vessel 30. The cone segment 24 further includes openings or slits 26 that extend up toward the lip, or outer perimeter of the cone segment 24 to provide more area for juice flow into the vessel 30 when pulp is collected in the basin portion of the cone segment 24. The slits 26 can circumferentially extend on or along the cone segment 24.

The vessel 30 is configured to receive the cone segment 24 with the reamer 12. The vessel 30 further has a vessel base 34.

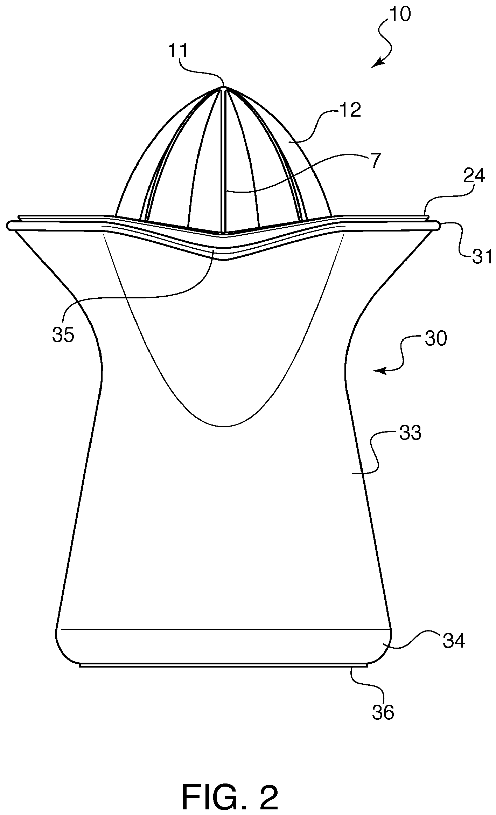

FIG. 2 illustrates a perspective side view of the citrus juicer of FIG. 1, in accordance with an embodiment of the present invention.

The side view of the citrus juicer 10 further illustrates the reamer element 12 defining the plurality of protruding ribs 7, as well as the apex 11. The reamer element 12 sits on the cone segment 24, which is received by the vessel 30. The vessel 30 can have a receptacle portion 33 with a vessel base 34 at a distal end thereof. A rubber foot 36 can be attached to the vessel base 34. The proximal end of the vessel 30 can define an outer perimeter or annular rim 31, as well as a spout 35.

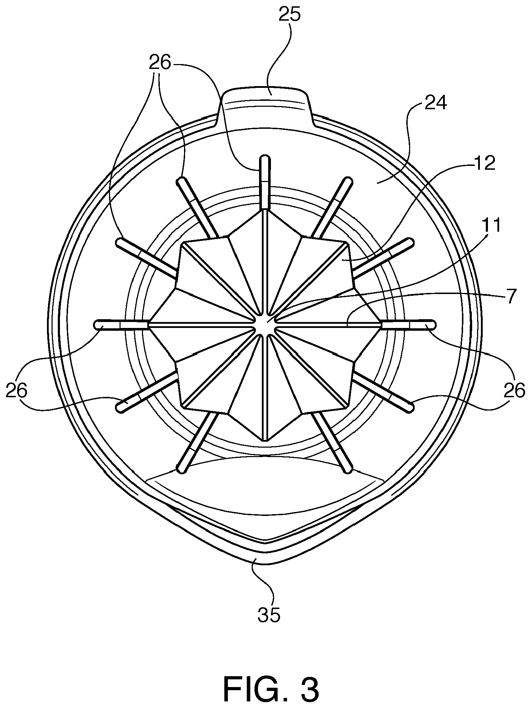

FIG. 3 illustrates a perspective top view of the citrus juicer of FIG. 1, in accordance with an embodiment of the present invention.

The top view further illustrates the cone segment 24. The cone segment 24 includes tab 25, as well as a plurality of slits 26 circumferentially extending on or along the cone segment 24. The reamer element 12 is further shown with the plurality of protruding ribs 7, as well as the apex 11 centrally disposed thereof. The spout 35 of the vessel 30 is also visible.

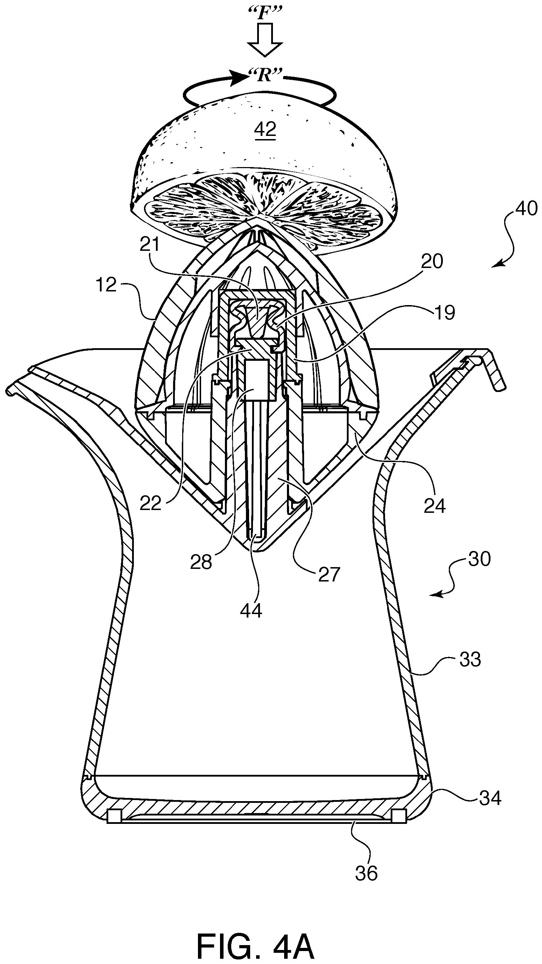

FIG. 4A illustrates a cross-sectional side view of the citrus juicer of FIG. 1 where the rubber spring is in a compressed state, in accordance with an embodiment of the present invention.

The cross-sectional view 40 better illustrates operation of the rubber spring 20. When a force "F" is applied to the top portion of the reamer element 12 the rubber spring 20 compresses or is in a compressed state. The rubber spring 20 includes centrally disposed projection 21. When the rubber spring 20 is in a compressed state, the sidewalls of the rubber spring 20 directly contact the centrally disposed projection 21. Additionally, when the rubber spring 20 is in a compressed state, the centrally disposed projection 21 engages the spring support member 22. The spring support member 22 is received over the conduit 28 extending from the shaft 27 of the cone segment 24. The conduit 28 of the shaft 27 can be connected to a rod 44 extending to a distal end of the cone segment 24.

The rubber spring 20 can be fixedly mounted to the spring support member 22. In one example, the spring support member 22 may include notches for receiving the rubber spring 20. The notches can be a single notch circumferentially extending around the proximal end of the spring support member 22. The rubber spring 20 can be confined within the reamer element 12 during operation. In other words, the rubber spring 20 remains within the inside area or space of the reamer element 12.

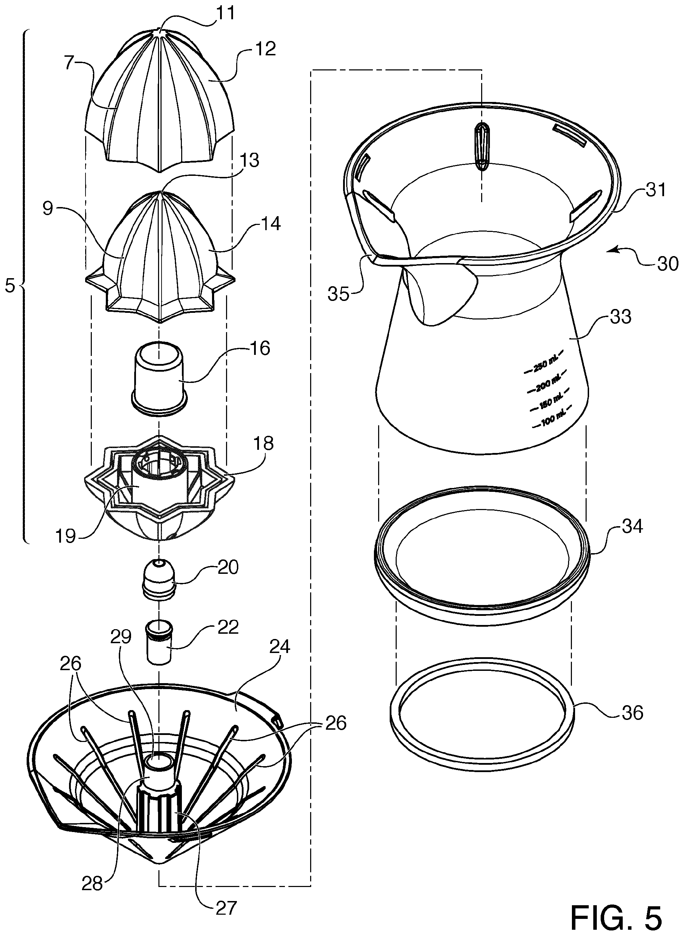

The rubber spring 20 engages the inner sidewalls of the reamer base support member 19 of the reamer base 18 (FIG. 5). Thus, the rubber spring 20 is enclosed or encompassed within the reamer base support member 19 of the reamer base 18. The rubber spring 20 can be substantially or generally cone-shaped or semi-spherical with a central projection 21 or lip.

In operation, when, e.g., a fruit 42 is placed on the reamer 12, and the fruit 42 is rotated in a direction "R" on the reamer 12, such that a downward force "F" is generated on the reamer 12, the reamer 12 is displaced in a vertical direction with respect to the shaft 27 of the cone element 24. The rubber spring 20 becomes compressed such that the centrally disposed projection 21 engages the spring support member 22, which in turn engages the conduit 28 extending from the shaft 27 of the cone member 24. Stated differently, the reamer 12 is configured to engage the rubber spring 20 such that vertical movement of the reamer 12 causes the rubber spring 20 to transition between compressed and uncompressed states.

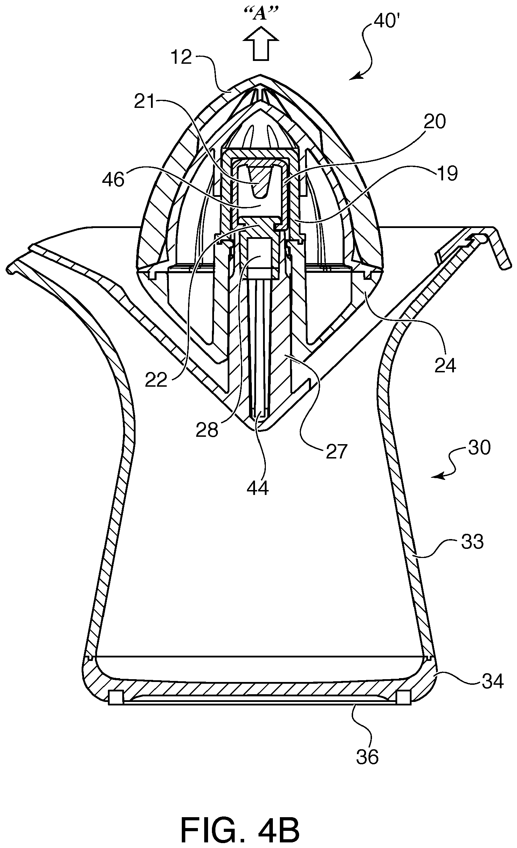

FIG. 4B illustrates a cross-sectional side view of the citrus juicer of FIG. 1 where the rubber spring is in an uncompressed state, in accordance with an embodiment of the present invention.

The cross-sectional view 40' better illustrates operation of the rubber spring 20. When the force "F" is withdrawn from the top portion of the first reamer 12, the rubber spring 20 decompresses or is in a decompressed state (such that the reamer 12 moves in a direction "A"). The rubber spring 20 includes centrally disposed projection 21. When the rubber spring 20 is in a decompressed state, the sidewalls of the rubber spring 20 do not contact the centrally disposed projection 21. Instead, the sidewalls of the rubber spring 20 remain parallel to the sidewalls of the reamer base support member 19 of the reamer base 18 (FIG. 5).

The spring support member 22 is received over the conduit 28 extending from the shaft 27 of the cone segment 24. The conduit 28 of the shaft 27 can be connected to a rod 44 extending to a distal end of the cone segment 24. However, the spring support member 22 does not engage the centrally disposed projection 21. Instead, a space or area or gap region 46 is present between the distal end of the centrally disposed projection 21 and the top surface of the spring support member 22.

The rubber spring 20 is still fixedly mounted to the spring support member 22. In one example, the spring support member 22 may include notches for receiving the rubber spring 20. The notches can be a single notch circumferentially extending around the proximal end of the spring support member 22. The rubber spring 20 can be confined within the reamer element 12 during operation (compressed or decompressed states). In other words, the rubber spring 20 remains within the inside area or space defined by the reamer 12 at all times.

In operation, when, e.g., the fruit 42 is withdrawn from the reamer 12, such that the reamer 12 moves in an upward direction "A," the reamer 12 is displaced in a vertical direction with respect to the shaft 27 of the cone element 24. The rubber spring 20 becomes decompressed such that the centrally disposed projection 21 disengages the spring support member 22. Stated differently, the reamer 12 is configured to engage/disengage the rubber spring 20 such that vertical movement of the reamer 12 causes the rubber spring 20 to transition between compressed and uncompressed states.

FIG. 5 illustrates an exploded perspective view of the citrus juicer of FIG. 1, in accordance with an embodiment of the present invention.

The exploded view illustrates the dual reamer configuration. A first reamer 12 is placed over a second reamer 14. The first reamer 12 includes a plurality of protruding ribs 7, as well as an apex 11. The second reamer 14 includes a plurality of protruding ribs 9, as well as an apex 13.

The second reamer 14 is placed within the first reamer 12. Stated differently, the second reamer 14 is embedded or incorporated within the first reamer 12. The first and second reamers 12, 14 are releasably engageable to each other. The first and second reamers 12, 14 function in tandem.

The first reamer 12 can be used to squeeze a first fruit (e.g., an orange), whereas the second reamer 14 can be used to squeeze a second fruit (e.g., a lemon). The user can interchangeably operate the first and second reamers 12, 14. In operation, the first reamer 12 is positioned over the second reamer 14. The user utilizes the first reamer 12 to squeeze, e.g., an orange, as the second reamer 14 remains embedded within the first reamer 12. Once the user completes this operation, the user can remove the first reamer 12 from the second reamer 14, such that the second reamer 14 is exposed. Now, the user can utilize the second reamer 14 to squeeze, e.g., a lemon. Thus, the first and second reamers 12, 14 can be interchangeably used.

The first and second reamers 12, 14 can be combined to form a dual reamer or dual reamer configuration.

The first and second reamers 12, 14 can cooperate with a reamer base cap 16 that engages a reamer base support member 19 of a reamer base 18. Element 5 can designate the reamer base configuration including both reamers 12, 14, as well as supporting structural elements enabling 5 to operably communicate with the spring member 20.

The spring member 20 can be fixedly mounted to the spring support member 22, which in turn couples to or engages with the conduit 28 extending from the shaft 27 of the cone segment 24. The opening 29 of the conduit 28 is vertically aligned with rubber spring 20 and the spring support member 22. The cone segment 24 further illustrates the slits 26 extending circumferentially thereon. The rubber spring 20 is vertically aligned with the apex 11 of the first reamer 12 and vertically aligned with the apex 13 of the second reamer 14. The rubber spring 20 is vertically aligned in a central portion of the cone segment 24. The rubber spring 20 compresses and decompresses within the confines of the reamer base configuration 5. The rubber spring 20 can be substantially or generally cone-shaped or semi-spherical with a central projection 21 or lip extending therein.

The reamer base configuration 5 and the cone segment 24 are disposed within the cavity of the vessel 30. The vessel 30 defines an outer perimeter 31 or annular rim 31, as well as a spout 35. The vessel 30 further defines a container or receptacle 33 for receiving the juices from the first and second reamers 12, 14. The vessel 30 includes a vessel base 24, as well as a rubber foot 36.

Therefore, in summary, a citrus juicer is presented. The citrus juicer includes a vessel, a cone segment configured to be received within the vessel, a rubber spring configured to operably communicate with the cone segment, and a reamer element configured to engage the rubber spring such that vertical movement of the reamer element causes the rubber spring to transition between compressed and uncompressed states.

The reamer element of the citrus juicer can be a dual reamer. That is, the reamer element can include a first reamer and a second reamer, where the second reamer is configured to be embedded or incorporated within the first reamer. The first reamer is releasably engageable to the second reamer. The first and second reamers do not rotate. Instead, first and second reamers move or transition or are displaced in a vertical direction with respect to the conduit of the shaft of the cone segment. The vertical or perpendicular movement of the first and second reamers is enabled by the compression and decompression of the rubber spring. The rubber spring compresses and decompresses based on a force applied to the reamers.

While there have been shown, described and pointed out fundamental novel features of the present principles, it will be understood that various omissions, substitutions and changes in the form and details of the methods described and devices illustrated, and in their operation, may be made by those skilled in the art without departing from the spirit of the same. For example, it is expressly intended that all combinations of those elements and/or method steps which perform substantially the same function in substantially the same way to achieve the same results are within the scope of the present principles. Moreover, it should be recognized that structures and/or elements and/or method steps shown and/or described in connection with any disclosed form or implementation of the present principles may be incorporated in any other disclosed, described or suggested form or implementation as a general matter of design choice. It is the intention, therefore, to be limited only as indicated by the scope of the claims appended hereto.

It should also be understood that the example embodiments disclosed and taught herein are susceptible to numerous and various modifications and alternative forms. Thus, the use of a singular term, such as, but not limited to, "a" and the like, is not intended as limiting of the number of items. Furthermore, the naming conventions for the various components, functions, parameters, thresholds, and other elements used herein are provided as examples, and can be given a different name or label. The use of the term "or" is not limited to exclusive "or" but can also mean "and/or".

Having described preferred embodiments, which serve to illustrate various concepts, structures and techniques that are the subject of this patent, it will now become apparent to those of ordinary skill in the art that other embodiments incorporating these concepts, structures and techniques may be used. Additionally, elements of different embodiments described herein may be combined to form other embodiments not specifically set forth above.

Accordingly, it is submitted that that scope of the patent should not be limited to the described embodiments but rather should be limited only by the spirit and scope of the following claims.

### Representative Features

1. A citrus juicer comprising:
   a vessel configured to receive a cone segment, the cone segment defining a conduit extending from a shaft and a plurality of slits extending circumferentially thereon;
   a rubber spring vertically aligned with an opening of the conduit; and
   a reamer element in operable communication with the rubber spring.
2. The citrus juicer of clause 1, wherein the rubber spring is fixedly mounted to a sprint support member.
3. The citrus juicer of clause 2, wherein the spring support member is coupled to the conduit extending from the shaft of the cone segment.
4. The citrus juicer of clause 3, wherein the rubber spring defines a centrally disposed projection.
5. The citrus juicer of clause 4, wherein, when a force is applied to a top portion of the reamer element, the rubber spring is in a compressed state such that the centrally disposed projection engages the spring support element to displace the reamer element in a vertical direction with respect to the shaft of the cone element.
6. The citrus juicer of clause 5, wherein sidewalls of the rubber spring engage the centrally disposed projection in the compressed state.
7. The citrus juicer of clause 5, wherein, when the force is withdrawn, the rubber spring assumes an uncompressed state such that the centrally disposed projection disengages from the spring support element.
8. The citrus juicer of clause 1, wherein the rubber spring is confined within the reamer element during operation.
9. The citrus juicer of clause 1, wherein the reamer element includes a first reamer and a second reamer.
10. The citrus juicer of clause 9, wherein the second reamer is configured to be received within the first reamer.
11. The citrus juicer of clause 9, wherein the first reamer is releasably engaged to the second reamer.
12. A citrus juicer comprising:
   a vessel configured to receive a cone segment, the cone segment defining a conduit extending from a shaft and a plurality of slits extending circumferentially thereon;
   a rubber spring mounted on a spring support element, the spring support element configured to be received by the conduit extending from the shaft of the cone segment; and
   a dual reamer in operable communication with the rubber spring.
13. The citrus juicer of clause 12, wherein the dual reamer includes a second reamer embedded within a first reamer.
14. The citrus juicer of clause 13, wherein the first and second reamers are interchangeably operable.
15. The citrus juicer of clause 12, wherein the rubber spring defines a centrally disposed projection.
16. The citrus juicer of clause 15, wherein, when a force is applied to a top portion of the dual reamer, the rubber spring is in a compressed state such that the centrally disposed projection engages the spring support element to displace the dual reamer in a vertical direction with respect to the shaft of the cone element.
17. The citrus juicer of clause 16, wherein sidewalls of the rubber spring engage the centrally disposed projection in the compressed state.
18. The citrus juicer of clause 16, wherein, when the force is withdrawn, the rubber spring assumes an uncompressed state such that the centrally disposed projection disengages from the spring support element.
19. The citrus juicer of clause 12, wherein the rubber spring is confined within the dual reamer during operation.
20. A citrus juicer comprising:
   a vessel;
   a cone segment configured to be received within the vessel;
   a rubber spring configured to operably communicate with the cone segment; and
   a reamer element configured to engage the rubber spring such that vertical movement of the reamer element causes the rubber spring to transition between compressed and uncompressed states.

## Claims

1. A citrus juicer comprising:
a vessel configured to receive a cone segment, the cone segment defining a conduit extending from a shaft and a plurality of slits extending circumferentially thereon;
a rubber spring vertically aligned with an opening of the conduit; and
a reamer element in operable communication with the rubber spring.

2. The citrus juicer of claim 1, wherein the rubber spring is fixedly mounted to a sprint support member.

3. The citrus juicer of claim 2, wherein the spring support member is coupled to the conduit extending from the shaft of the cone segment.

4. The citrus juicer of claim 3, wherein the rubber spring defines a centrally disposed projection.

5. The citrus juicer of claim 4, wherein, when a force is applied to a top portion of the reamer element, the rubber spring is in a compressed state such that the centrally disposed projection engages the spring support element to displace the reamer element in a vertical direction with respect to the shaft of the cone element.

6. The citrus juicer of claim 5, wherein sidewalls of the rubber spring engage the centrally disposed projection in the compressed state.

7. The citrus juicer of claim 5, wherein, when the force is withdrawn, the rubber spring assumes an uncompressed state such that the centrally disposed projection disengages from the spring support element.

8. The citrus juicer of claim 1, wherein the rubber spring is confined within the reamer element during operation.

9. The citrus juicer of claim 1, wherein the reamer element includes a first reamer and a second reamer.

10. The citrus juicer of claim 9, wherein the second reamer is configured to be received within the first reamer.

11. The citrus juicer of claim 9, wherein the first reamer is releasably engaged to the second reamer.
